# EUROPEAN PATENT APPLICATION

(11) **EP 4 542 976 A1**
(43) Date of publication of application: **23.04.2025**
(21) Application number: 22948080.1
(22) Date of filing: 24.06.2022
(51) Int. Cl.: H04M 1/72415, H04M 1/72469, H04Q 9/00, H04N 5/445

(54) **MOBILE TERMINAL AND DISPLAY SYSTEM**

(71) Applicant: LG Electronics Inc., Yeongdeungpo-gu Seoul 07336 (KR)
(72) Inventor: KOO, Changbum, Seoul 06772 (KR); PARK, Taejin, Seoul 06772 (KR)
(74) Representative: Schornack, Oliver
(86) International application number: PCT/KR2022/009024
(87) International publication number: WO 2023/249146

(57) **Abstract**

A mobile terminal according to an embodiment of the present invention may comprise: a display; a near field communication (NFC) circuit for transmitting an NFC tagging signal to a remote control device and receiving, in response to the NFC tagging signal, address information and capability information of a display device from the remote control device; a Wi-Fi circuit for performing Wi-Fi connection with the display device by using the address information of the display device; and a processor for displaying, on the display on the basis of the capability information, a plurality of interworking functions that may be supported by the display device.

## Description

### Technical Field

The present disclosure relates to a mobile terminal and a display system.

### Background Art

Digital TV services using wired or wireless communication networks are becoming common. Digital TV services are capable of providing various services that could not be provided by the existing analog broadcasting services.

For example, Internet Protocol Television (IPTV) and smart TV services, which are types of digital TV services, provide interactivity so that users can actively select the types of watching programs, the watching time, and the like. The IPTV and smart TV services can provide various additional services, such as Internet search, home shopping, and online games, based on such interactivity.

That is, recent TVs provide functions for interaction between smartphones and TVs through near field communication (NFC) tagging.

However, the function of NFC tagging is limited to some functions specified by manufacturers.

Since continuously readable/writable chipsets are applied to NFC tags, the functions can be provided in various ways.

In the related art, smartphones provide the function of interworking with TVs through NFC tagging, but limitedly provides the function of interworking with TVs.

### Disclosure

### Technical Problem

The object of the present disclosure is to provide various functions between a smartphone and a display device through NFC tagging.

The object of the present disclosure is to provide functions that may interwork with a display device by verifying the specifications/capabilities of the display device through NFC tagging.

### Technical Solution

A mobile terminal according to an embodiment of the present disclosure may include a display, a near field communication (NFC) circuit configured to transmit an NFC tagging signal to a remote-control device and receive address information and capability information of a display device from the remote-control device in response to the NFC tagging signal, a Wi-Fi circuit configured to perform a Wi-Fi connection with the display device by using the address information of the display device, and a processor configured to display, on the display, a plurality of interworking functions supportable by the display device, based on the capability information.

A display system according to an embodiment of the present disclosure may include a remote-control device, a display device configured to be paired with the remote-control device through Bluetooth and transmit address information and capability information of a display device to the remote-control device, and a mobile terminal, wherein the mobile terminal may be configured to transmit a near field communication (NFC) tagging signal to the remote-control device and receive the address information and the capability information of the display device from the remote-control device in response to the NFC tagging signal, perform a Wi-Fi connection with the display device by using the address information of the display device, and display a plurality of linkage functions supportable by the display device, based on the capability information.

### Advantageous Effects

According to an embodiment of the present disclosure, a user can easily utilize an interworking function between a display device and a mobile terminal simply by tagging the mobile terminal to a remote-control device.

According to various embodiments of the present disclosure, it is possible to accurately display functions that may be supported through a mobile terminal by receiving support functions for each OS version and model of the display. Accordingly, convenience may be significantly improved as users do not need to search for functions that may separately interwork with the display device.

### Brief Description of Drawings

FIG. 1 is a block diagram illustrating a configuration of a display device according to an embodiment of the present disclosure.
FIG. 2 is a block diagram illustrating a remote-control device according to an embodiment of the present disclosure.
FIG. 3 is a diagram illustrating an actual configuration of a remote-control device according to an embodiment of the present disclosure.
FIG. 4 is a diagram illustrating an example of utilizing a remote-control device according to an embodiment of the present disclosure.
FIG. 5 is a block diagram illustrating a configuration of a mobile terminal according to an embodiment of the present disclosure.
FIG. 6 is a ladder diagram for an operating method of a system according to an embodiment of the present disclosure.
FIGS. 7a and 7b are diagrams for describing a scenario of interworking between a display device and a mobile terminal through near field communication (NFC) tagging according to an embodiment of the present disclosure.
FIG. 8 is a diagram for describing a code table that encodes interworking functions that may be provided by a display device according to an embodiment of the present disclosure.
FIG. 9 is a ladder diagram for describing an operating method of a system according to an embodiment of the present disclosure.
FIGS. 10a and 10b are diagrams for describing a scenario of interworking between a display device and a mobile terminal through NFC tagging according to an embodiment of the present disclosure.
FIG. 11 is a diagram for describing a message transmitted to a mobile terminal by a remote-control device according to NFC tagging, according to an embodiment of the present disclosure.
FIG. 12 is a diagram for describing a message transmitted to a mobile terminal by a remote-control device according to NFC tagging, according to an embodiment of the present disclosure.

### Best Mode

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure, for example, as an artificial display device that adds a computer supporting function to a broadcast receiving function, can have an easy-to-use interface such as a writing input device, a touch screen, or a spatial remote-control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS can be used.

Accordingly, since various applications are freely added or deleted on a general purpose OS kernel, a display device described herein, for example, can perform various user-friendly functions. The display device, in more detail, can be a network TV, Hybrid Broadcast Broadband TV (HBBTV), smart TV, light-emitting diode (LED) TV, organic light-emitting diode (OLED) TV, and so on and in some cases, can be applied to a smartphone.

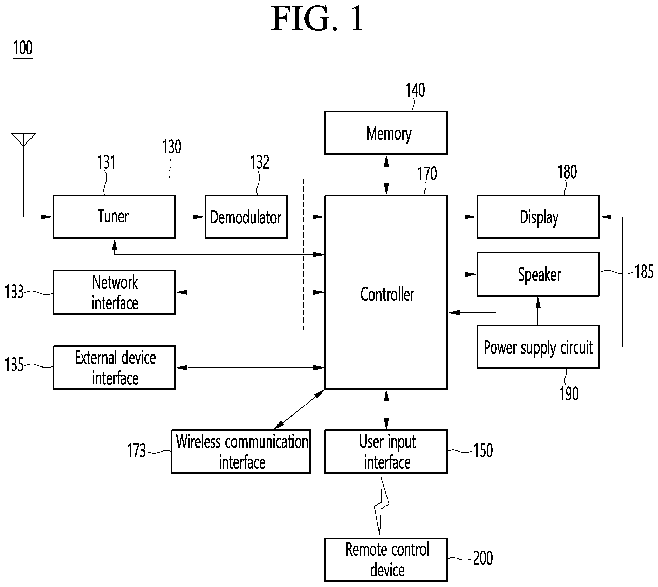

FIG. 1 is a block diagram illustrating a configuration of a display device according to an embodiment of the present disclosure.

Referring to FIG. 1, a display device 100 may include a broadcast reception module 130, an external device interface 135, a memory 140, a user input interface 150, a controller 170, a wireless communication interface 173, a microphone 175, a display 180, a speaker 185, and a power supply circuit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into video signals, audio signals, and broadcast program-related data signals, and may restore the divided video signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wirely connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be output through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network including internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. That is, the network interface 133 may transmit or receive data to or from a corresponding server by accessing a predetermined webpage through the network.

The network interface 133 may receive content or data provided from a content provider or a network operator. That is, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote-control device 200 or transmit control signals from the controller 170 to the remote-control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not shown) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

The wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication circuit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, in the case that the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The microphone 175 may acquire audio. The microphone 175 acquire audio around the display device 100.

Furthermore, the display device 100 shown in FIG. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the speaker 185.

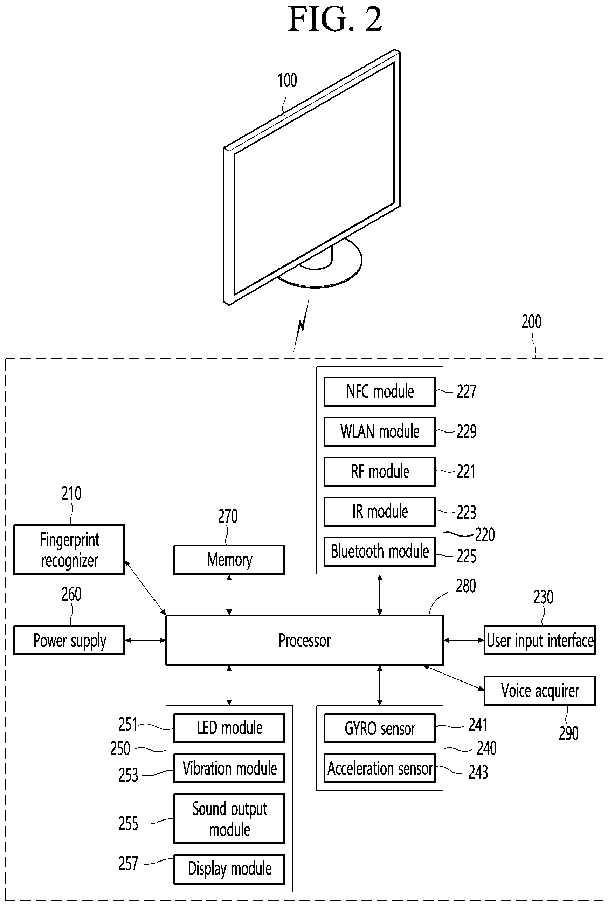

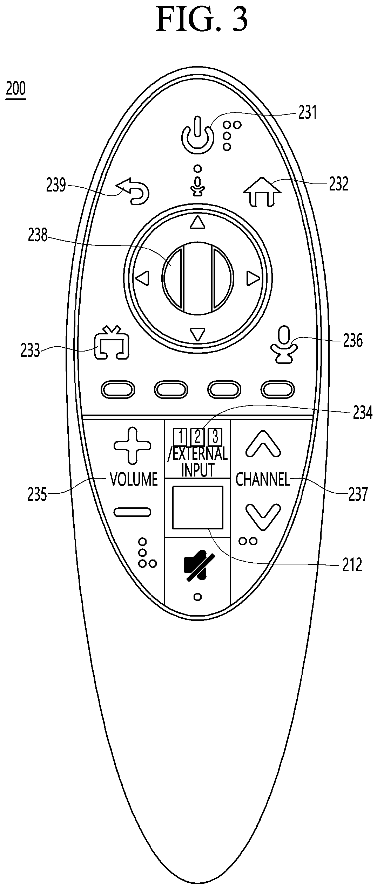

A remote-control device according to an embodiment of the present disclosure will be described with reference to FIGS. 2 and 3.

FIG. 2 is a block diagram illustrating a remote-control device according to an embodiment of the present disclosure and FIG. 3 is a diagram illustrating an actual configuration of a remote-control device according to an embodiment of the present disclosure.

First, referring to FIG. 2, a remote-control device 200 may include a fingerprint recognition device 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 transmits/receives signals to/from an arbitrary any one of display devices according to the above-mentioned embodiments of the present disclosure.

The remote-control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote-control device 200 may include a Bluetooth circuit 225 capable of transmitting or receiving signals to or from the display device 100 according to a Bluetooth communication standard. In addition, the remote-control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote-control device 200 may transmit signals containing information on the movement of the remote-control device 200 to the display device 100 through the wireless communication circuit 220.

Moreover, the remote-control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote-control device 200. In the case that the user input interface 230 includes a hard key button, a user may input a command relating to the display device 100 to the remote-control device 200 through the push operation of the hard key button. This will be described with reference to FIG. 3.

Referring to FIG. 3, the remote-control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

FIG. 2 is described again.

In the case that the user input interface 230 includes a touch screen, a user may touch a soft key of the touch screen to input a command relating to the display device 100 to the remote-control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote-control device 200.

For example, the gyro sensor 241 may sense information on an operation of the remote-control device 200 on the basis of x, y, and z axes and the acceleration sensor 243 may sense information on a movement speed of the remote-control device 200. Moreover, the remote-control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED module 251 for flashing, a vibrator 253 for generating vibration, a speaker 255 for outputting sound, or a display 257 for outputting an image, in the case that the user input interface 230 is manipulated or signals are transmitted/received to/from the display device 100 through the wireless communication circuit 220.

The power supply circuit 260 supplies power to the remote-control device 200 and in the case that the remote-control device 200 does not move for a predetermined time, stops the power supply, so that power waste may be reduced.

The power supply circuit 260 may resume the supply of power in the case that a predetermined key provided at the remote-control device 200 is operated.

The memory 270 may store various kinds of programs and application data required to control or operate the remote-control device 200.

In the case that the remote-control device 200 transmits/receives signals wirelessly through the display device 100 and the RF module 221, the remote-control device 200 and the display device 100 transmits/receives signals through a predetermined frequency band.

The controller 280 of the remote-control device 200 may store, in the memory 270, information on a frequency band for transmitting/receiving signals to/from the display device 100 paired with the remote-control device 200 and refer to it.

The controller 280 controls general matters relating to the control of the remote-control device 200. The controller 280 may transmit a signal corresponding to a predetermined key operation of the user input interface 230 or a signal corresponding to the movement of the remote-control device 200 sensed by the sensor 240 to the display device 100 through the wireless communication circuit 220.

In addition, the microphone 290 of the remote-control device 200 may acquire voice.

A plurality of the microphone 290 may be provided.

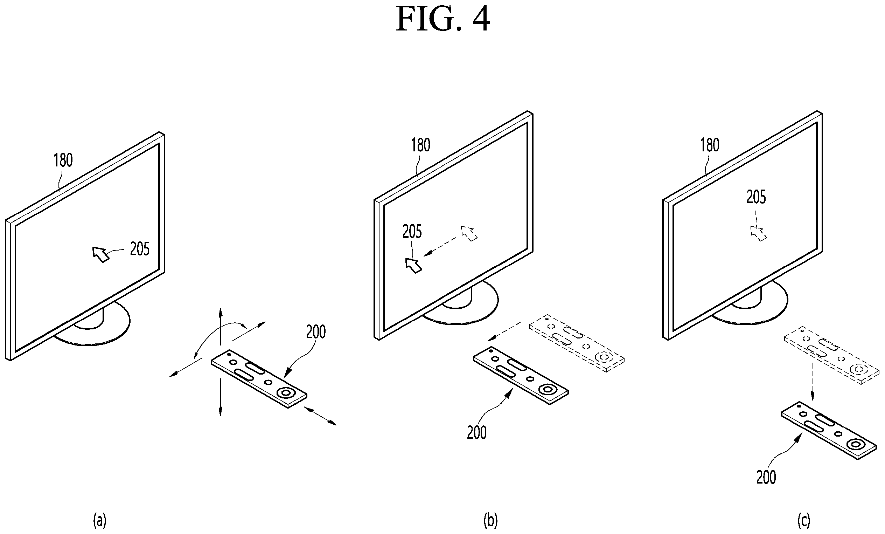

Next, FIG. 4 is described.

FIG. 4 is a view illustrating an example of utilizing a remote-control device according to an embodiment of the present disclosure.

FIG. 4(a) illustrates that a pointer 205 corresponding to the remote-control device 200 is displayed on the display unit 180.

A user may move or rotate the remote-control device 200 vertically or horizontally. The pointer 205 displayed on the display unit 180 of the display device 100 corresponds to a movement of the remote-control device 200. Since the corresponding pointer 205 is moved and displayed according to a movement on a 3D space as show in the drawing, the remote-control device 200 may be referred to as a spatial remote-control device.

FIG. 4(b) illustrates that in the case that a user moves the remote-control device 200, the pointer 205 displayed on the display unit 180 of the display device 100 is moved to the left according to the movement of the remote-control device 200.

Information on a movement of the remote-control device 200 detected through a sensor of the remote-control device 200 is transmitted to the display device 100. The display device 100 may calculate the coordinates of the pointer 205 from the information on the movement of the remote-control device 200. The display device 100 may display the pointer 205 to match the calculated coordinates.

FIG. 4(c) illustrates that while a specific button in the remote-control device 200 is pressed, a user moves the remote-control device 200 away from the display unit 180. Thus, a selected region in the display unit 180 corresponding to the pointer 205 may be zoomed in and displayed in an enlarged size.

On the other hand, in the case that a user moves the remote-control device 200 close to the display unit 180, a selection area in the display unit 180 corresponding to the pointer 205 may be zoomed out and displayed in a reduced size.

On the other hand, in the case that the remote-control device 200 is moved away from the display unit 180, a selection area may be zoomed out and in the case that the remote-control device 200 is moved closer to the display unit 180, a selection area may be zoomed in.

Additionally, in the case that a specific button in the remote-control device 200 is pressed, recognition of a vertical or horizontal movement may be excluded. That is, in the case that the remote-control device 200 is moved away from or closer to the display unit 180, the up, down, left, or right movement cannot be recognized and only the back and forth movement may be recognized. While a specific button in the remote-control device 200 is not pressed, only the pointer 205 is moved according to the up, down, left or right movement of the remote-control device 200.

Moreover, the moving speed or moving direction of the pointer 205 may correspond to the moving speed or moving direction of the remote-control device 200.

Furthermore, a pointer in this specification means an object displayed on the display unit 180 in response to an operation of the remote-control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

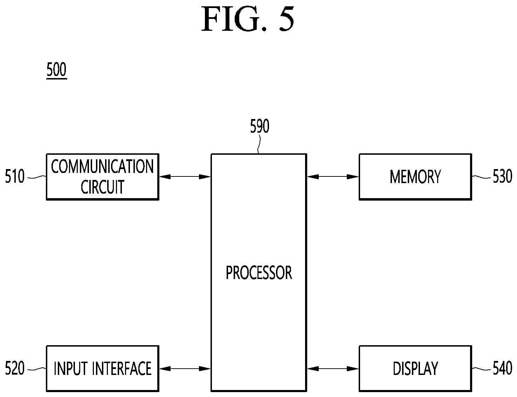

FIG. 5 is a block diagram illustrating a configuration of a mobile terminal according to an embodiment of the present disclosure.

A mobile terminal 500 may be implemented as a fixed device or a movable device, such as a projector, a mobile phone, a smartphone, a desktop computer, a laptop, a digital broadcasting terminal, a personal digital assistant (PDA), a portable multimedia player (PMP), a navigation device, a tablet personal computer (PC), a wearable device, a set-top box (STB), a digital multimedia broadcasting (DMB) receiver, a radio, or a desktop computer.

Referring to FIG. 5, the mobile terminal 500 may include a communication circuit 510, an input interface 520, a memory 530, a display 540, and a processor 590.

The communication circuit 510 may transmit and receive data to and from external devices, such as other mobile terminals or servers, by using wired or wireless communication technology.

The communication circuit 510 may perform communication by using one of the communication standards such as Global System for Mobile communication (GSM), Code Division Multi Access (CDMA), Long Term Evolution (LTE), 5G, WLAN (Wireless LAN), Wireless-Fidelity (Wi-Fi), Bluetooth, Radio Frequency Identification (RFID), Infrared Data Association (IrDA), ZigBee, and Near Field Communication (NFC).

The input interface 520 may include a camera for inputting a video signal, a microphone for receiving an audio signal, a user input interface for receiving information from a user, etc.

The camera or the microphone may be treated as a sensor, and the signal obtained from the camera or the microphone may be referred to as sensing data or sensor information.

The memory 530 may store various software and data related to the operation of the mobile terminal 500.

The display 540 may display a video signal received from the outside.

The processor 590 may control the overall operation of the mobile terminal 500.

When the interworking with the external device is required to perform the operation of the mobile terminal 500, the processor 590 may generate a control signal for controlling the external device and transmit the generated control signal to the external device.

The processor 590 may obtain intent information for user input and determine the user's requirement based on the obtained intent information.

The processor 590 may control at least some components of the mobile terminal 500 so as to drive an application program stored in the memory 170.

The processor 590 may operate two or more components included in the mobile terminal 500 in combination so as to drive the application program.

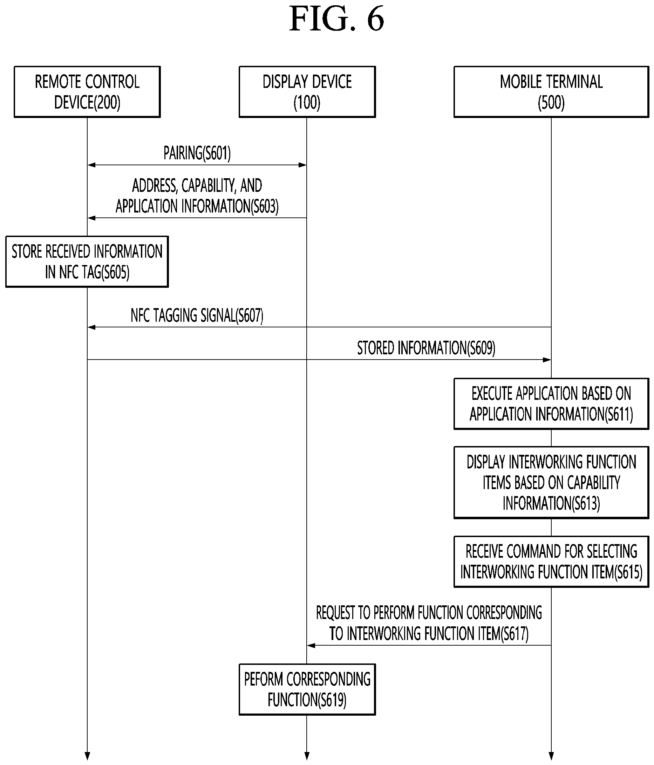

FIG. 6 is a ladder diagram for describing an operating method of a system according to an embodiment of the present disclosure.

Referring to FIG. 6, the display device 100 and the remote-control device 200 are paired through Bluetooth communication (step S601).

The controller 170 of the display device 100 transmits address information of the display device 100, capability information of the display device 100, and application information to the remote-control device 200 through a Bluetooth circuit included in the wireless communication interface 173 as Bluetooth pairing is established with the remote-control device 200 (step S603).

In an embodiment, the address information of the display device 100 is an address that identifies the display device 100 and may include one or more of a Bluetooth address, a Wi-Fi address, and a Wi-Fi direct address.

More specifically, the Bluetooth address may be a Bluetooth MAC address, the Wi-Fi address may be a Wi-Fi MAC address, and the Wi-Fi direct address may be a P2P MAC address.

In an embodiment, the capability information of the display device 100 may include information about functions that may interwork with the mobile terminal 500.

Specifically, the capability information of the display device 100 may include at least one of a mirroring function for viewing the screen of the mobile terminal 500 on the display device 100, a reverse mirroring function for viewing the screen of the display device 100 on the mobile terminal 500, a function for outputting audio output of the display device 100 to the mobile terminal 500, and a function for viewing content of the mobile terminal 500 on the display device 100.

In an embodiment, the capability information may further include an operating system (OS) version and a model name of the display device 100.

The capability information may include interworking functions supportable in the OS version and the model name of the display device 100.

The application information may include information about an application for providing the function of interworking with the mobile terminal 500.

The application information may include an application's name, an application's OS, an application's version, etc.

The controller 280 of the remote-control device 200 stores the address information of the display device 100, the capability information of the display device 100, and the application information received from the display device 100 in a tag of the NFC circuit 227 (step S605).

That is, the remote-control device 200 may write the information received from the display device 100 to an NFC tag.

The processor 590 of the mobile terminal 500 transmits an NFC tagging signal to the remote-control device 200 through the NFC circuit (step S607), and the remote-control device 200 transmits the information stored in the NFC tag to the mobile terminal 500 in response to the NFC tagging signal (step S609).

The process in which the mobile terminal 500 transmits the NFC tagging signal to the NFC tag of the remote-control device 200 may be a process of reading the information stored in the NFC tag.

The processor 590 of the mobile terminal 500 executes the application based on the application information received from the remote-control device 200 (step S611).

The processor 590 of the mobile terminal 500 may execute the application by using the application information obtained through NFC tagging.

In an embodiment, the processor 590 may connect to an application store server from which an application corresponding to the application information may be downloaded if the application is not installed on the mobile terminal 500. After that, the processor 590 may download the application and install the application on the mobile terminal 500.

Meanwhile, the mobile terminal 500 may attempt to connect to the display device 100 by using the address information of the display device 100 before or after the processor 590 executes the application through the Wi-Fi circuit. That is, the mobile terminal 500 and the display device 100 may be connected through Wi-Fi by using the address information of the display device 100.

After the application is executed, the processor 590 of the mobile terminal 500 displays a plurality of interworking function items that may interwork with the display device 100 on the display 540, based on the capability information received from the remote-control device 200 (step S613).

The processor 590 of the mobile terminal 500 may display a plurality of interworking function items on the display 540, based on the capability information including the functions that the display device 100 may interwork with the mobile terminal 500.

The screen that displays the plurality of interworking function items may be the application's execution screen.

The processor 590 of the mobile terminal 500 receives a command for selecting one of the plurality of interworking function items (step S615), and requests the display device 100 to perform a function corresponding to the selected interworking function item according to the received command through the Wi-Fi circuit (step S617).

The mobile terminal 500 and the display device 100 may be connected to each other through one of the Wi-Fi standard or the Wi-Fi direct standard.

The controller 170 of the display device 100 performs the corresponding function according to the request received from the mobile terminal 500 (step S619).

Hereinafter, the embodiment of FIG. 6 is described in more detail.

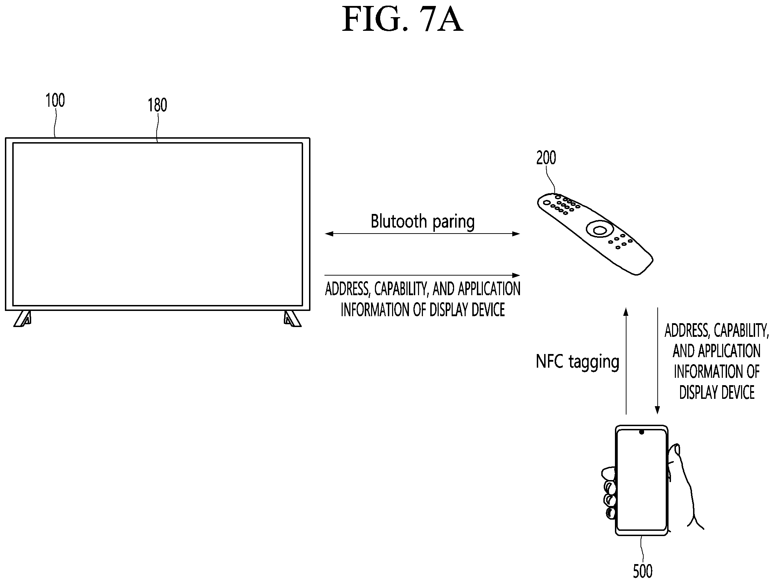

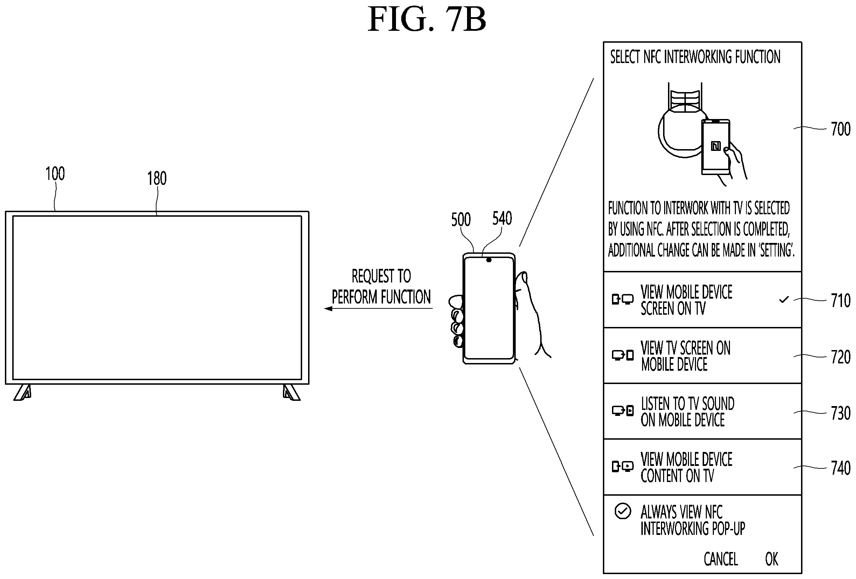

FIGS. 7a and 7b are diagrams for describing a scenario of interworking between the display device and the mobile terminal through NFC tagging according to an embodiment of the present disclosure.

Referring to FIG. 7a, the display device 100 and the remote-control device 200 are paired through the Bluetooth standard. When the Bluetooth pairing is completed, the display device 100 may transmit, to the remote-control device 200, the address information of the display device 100, the capability information of the display device 100, and the information about the application installed on the display device 100.

A plurality of applications may be installed on the display device 100, and information about a preset application that is triggered for the Bluetooth pairing may be transmitted to the remote-control device 200.

The remote-control device 200 may store the address information, the capability information, and the application information received from the display device 100 in the NFC tag of the NFC circuit 227.

After that, the user may tag the mobile terminal 500 to the NFC tag of the remote-control device 200.

The mobile terminal 500 may receive, from the remote-control device 200, the address information, the capability information, and the application information of the display device 100 stored in the NFC tag according to the NFC tagging.

The mobile terminal 500 may execute the application corresponding to the application information based on the application information, as shown in FIG. 7b. The application may be an application for controlling and managing the display device 100 or home appliances.

The mobile terminal 500 determines whether the application corresponding to the application's name (or identification information of the application) is installed on the mobile terminal 500, and in the case that the application is installed on the mobile terminal 500, executes the application.

In the case that an application corresponding to the application's name (or the application identification information) is not installed on the mobile terminal 500 or in the case that the version is not correct, the mobile terminal 500 may connect to the application store server and display the application store screen.

Meanwhile, after the execution of the application, the mobile terminal 500 may display, on the display 540, an application execution screen 700 including a plurality of function items 710 to 740 that may interwork with the display device 100, based on the capability information.

The first function item 710 may be a mirroring function item that allows the screen of the mobile terminal 100 to be viewed on the display device 100.

The second function item 720 may be a reverse mirroring function item that allows the screen of the display device 100 to be viewed on the mobile terminal 500.

The third function item 730 may be an audio reproduction function item in which the mobile terminal 500 outputs audio output by the display device 100.

The fourth function item 740 may be an item that allows content stored in the mobile terminal 500 or content available from the mobile terminal 500 to be viewed on the display device 100.

The mobile terminal 500 may transmit a request to perform the corresponding function to the display device 100 when one of the plurality of function items 710 to 740 is selected.

The mobile terminal 500 and the display device 100 may be connected by using the Wi-Fi standard through a router or may be P2P-connected through the Wi-Fi direct standard.

When the first function item 710 is selected, the mobile terminal 500 may transmit information about the screen of the mobile terminal 500 to the display device 100. The display device 100 may display a mirrored image based on information about the received screen.

When the second function item 720 is selected, the mobile terminal 500 may transmit a request for information about the screen of the display device 100 to the display device 100. The mobile terminal 500 may display a reverse mirroring image based on the received information about the screen of the display device 100.

When the third function item 730 is selected, the mobile terminal 500 may request the display device 100 to transmit audio output by the display device 100. The mobile terminal 500 may receive audio output by the display device 100 and reproduces the audio through a speaker provided in the mobile terminal 500.

When the fourth function item 740 is selected, the mobile terminal 500 may transmit content stored in the mobile terminal 500 or an access path (e.g., URL) of the content to the display device 100. The display device 100 may reproduce content based on the received content or access path.

As such, according to an embodiment of the present disclosure, the user may easily utilize the interworking function between the display device 100 and the mobile terminal 500 simply by tagging the mobile terminal 500 to the remote-control device 100.

In addition, the mobile terminal 500 may receive the supported interworking functions for each version and model of the display device 100 and accurately provide a list of functions that may be supported by the application.

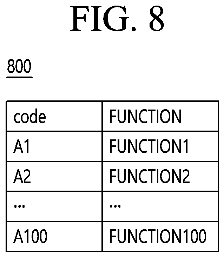

FIG. 8 is a diagram for describing a code table that encodes the interworking functions that may be provided by the display device according to an embodiment of the present disclosure.

A code table 800 of FIG. 8 is matched with a plurality of code numbers and an interworking function corresponding to each of the plurality of code numbers.

The code table 800 may be included in the capability information that the display device 100 transmits to the remote-control device 200.

The code table 800 may be stored in the memory 140 of the display device 100. When the display device 100 is paired with the remote-control device 200 through Bluetooth, the display device 100 may transmit the code table 800 stored in the memory 140 to the remote-control device 200.

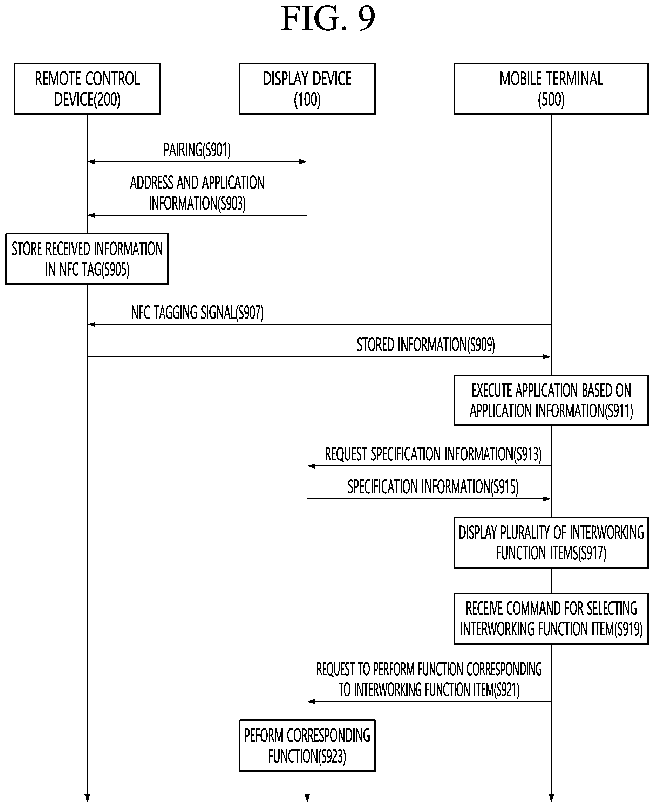

FIG. 9 is a ladder diagram for describing an operating method of a system according to an embodiment of the present disclosure.

In particular, FIG. 9 is an embodiment in which only address information and application information of the display device 100 are acquired according to the NFC tagging of the mobile terminal 500.

Referring to FIG. 9, the display device 100 and the remote-control device 200 are paired through Bluetooth communication (step S901).

The controller 170 of the display device 100 transmits address information of the display device 100 and application information to the remote-control device 200 through a Bluetooth circuit included in the wireless communication interface 173 as Bluetooth pairing is established with the remote-control device 200 (step S903).

That is, unlike the embodiment of FIG. 6, the display device 100 may not transmit capability information of the display device 100 to the remote-control device 200.

In an embodiment, the address information of the display device 100 is an address that identifies the display device 100 and may include one or more of a Bluetooth address, a Wi-Fi address, and a Wi-Fi direct address.

More specifically, the Bluetooth address may be a Bluetooth MAC address, the Wi-Fi address may be a Wi-Fi MAC address, and the Wi-Fi direct address may be a P2P MAC address.

The application information may include information about an application for providing the function of interworking with the mobile terminal 500.

The application information may include an application's name, an application's OS, an application's version, etc.

The controller 280 of the remote-control device 200 stores the address information of the display device 100 and the application information received from the display device 100 in the tag of the NFC circuit 227 (step S905).

That is, the remote-control device 200 may write the information received from the display device 100 to an NFC tag.

The processor 590 of the mobile terminal 500 transmits an NFC tagging signal to the remote-control device 200 through the NFC circuit (step S907), and the remote-control device 200 transmits the information stored in the NFC tag to the mobile terminal 500 in response to the NFC tagging signal (step S909).

The process in which the mobile terminal 500 transmits the NFC tagging signal to the NFC tag of the remote-control device 200 may be a process of reading the information stored in the NFC tag.

The processor 590 of the mobile terminal 500 executes the application based on the application information received from the remote-control device 200 (step S911).

The processor 590 of the mobile terminal 500 may execute the application by using the application information obtained through the NFC tagging.

In an embodiment, the processor 590 may connect to an application store server from which an application corresponding to the application information may be downloaded if the application is not installed on the mobile terminal 500. After that, the processor 590 may download the application and install the application on the mobile terminal 500.

After the application is executed, the processor 590 of the mobile terminal 500 requests specification information of the display device 100 from the display device 100 through the Wi-Fi circuit (step S913), and receives specification information from the display device 100 in response to the request (step S915).

The processor 590 may request the specification information from the display device 100 by using the address information of the display device 100.

In an embodiment, the specification information of the display device 100 may include the OS version of the display device 100, the model name of the display device 100, and the supportable interworking functions.

The interworking function may be a function that may interwork with the mobile terminal 500 through wireless communication.

The processor 590 of the mobile terminal 500 displays the plurality of interworking function items corresponding to the plurality of interworking functions on the display 540, based on the specification information (step S917).

The processor 590 of the mobile terminal 500 receives a command for selecting one of the plurality of interworking function items (step S919), and requests the display device 100 to perform a function corresponding to the selected interworking function item according to the received command through the Wi-Fi circuit (step S921).

The mobile terminal 500 and the display device 100 may be connected to each other through one of the Wi-Fi standard or the Wi-Fi direct standard.

The controller 170 of the display device 100 performs the corresponding function according to the request received from the mobile terminal 500 (step S923).

Hereinafter, the embodiment of FIG. 9 is described in more detail.

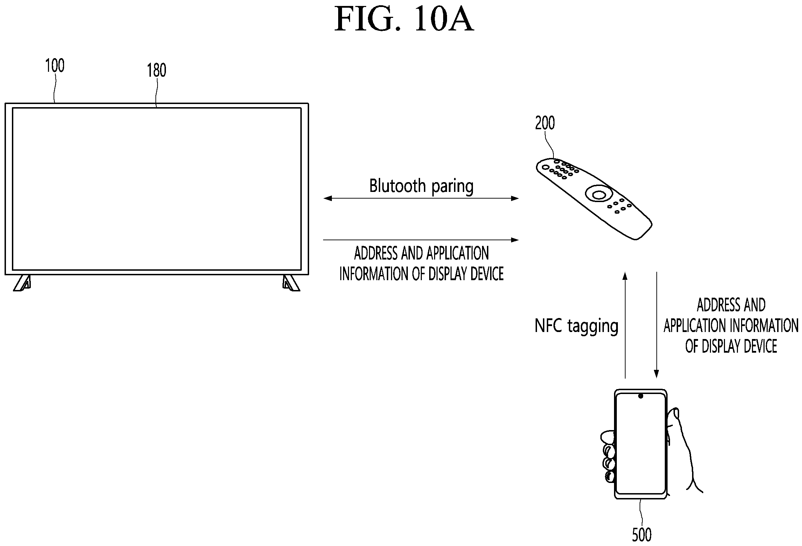

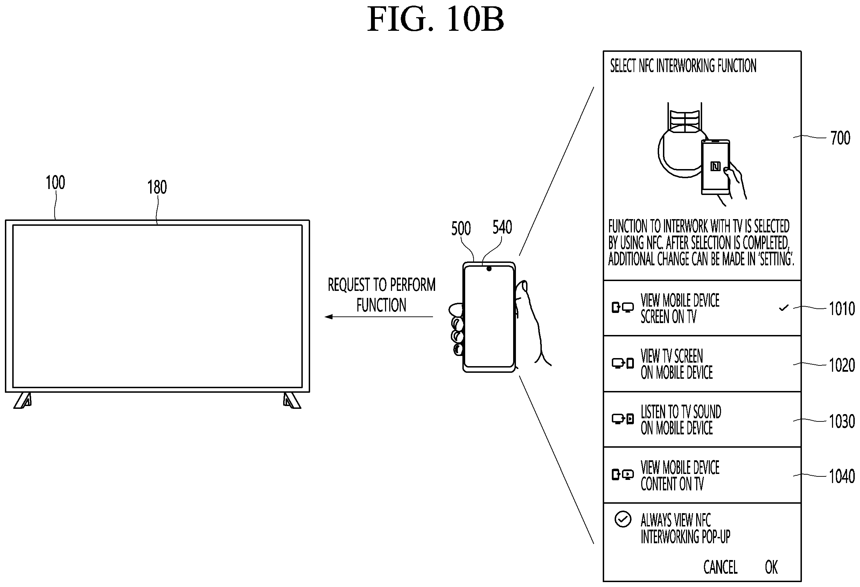

FIGS. 10a and 10b are diagrams for describing a scenario of interworking between the display device and the mobile terminal through NFC tagging according to an embodiment of the present disclosure.

Referring to FIG. 10a, the display device 100 and the remote-control device 200 are paired through the Bluetooth standard. When the Bluetooth pairing is completed, the display device 100 may transmit, to the remote-control device 200, the address information of the display device 100 and the information about the application installed on the display device 100.

A plurality of applications may be installed on the display device 100, and information about a preset application that is triggered for the Bluetooth pairing may be transmitted to the remote-control device 200.

The remote-control device 200 may store the address information and the application information received from the display device 100 in the NFC tag of the NFC circuit 227.

After that, the user may tag the mobile terminal 500 to the NFC tag of the remote-control device 200.

The mobile terminal 500 may receive, from the remote-control device 200, the address information and the application information of the display device 100 stored in the NFC tag according to NFC tagging.

The mobile terminal 500 may execute the application corresponding to the application information based on the application information, as shown in FIG. 10b. The application may be an application for controlling and managing the display device 100 or home appliances.

The mobile terminal 500 determines whether the application corresponding to the application's name (or identification information of the application) is installed on the mobile terminal 500, and in the case that the application is installed on the mobile terminal 500, executes the application.

In the case that an application corresponding to the application's name (or the application identification information) is not installed on the mobile terminal 500 or in the case that the version is not correct, the mobile terminal 500 may connect to the application store server and display the application store screen.

Meanwhile, after the execution of the application, the mobile terminal 500 may display, on the display 540, an application execution screen 1000 including a plurality of function items 1010 to 1040 that may interwork with the display device 100, based on the capability information.

The first function item 1010 may be a mirroring function item that allows the screen of the mobile terminal 100 to be viewed on the display device 100.

The second function item 1020 may be a reverse mirroring function item that allows the screen of the display device 100 to be viewed on the mobile terminal 500.

The third function item 1030 may be an audio reproduction function item (an audio reverse mirroring item) in which the mobile terminal 500 outputs audio output by the display device 100.

The fourth function item 1040 may be an item (a content reproduction function item) that allows content stored in the mobile terminal 500 or content available from the mobile terminal 500 to be viewed on the display device 100.

The mobile terminal 500 may transmit a request to perform the corresponding function to the display device 100 when one of the plurality of function items 1010 to 1040 is selected.

The mobile terminal 500 and the display device 100 may be connected by using the Wi-Fi standard through a router or may be P2P-connected through the Wi-Fi direct standard.

The interworking operation according to the selection of each function item is replaced with the description of FIG. 7b.

As such, according to an embodiment of the present disclosure, the user may easily utilize the interworking function between the display device 100 and the mobile terminal 500 simply by tagging the mobile terminal 500 to the remote-control device 100.

In addition, the mobile terminal 500 may dynamically change or add a list including functions that may be supported by the application when the interworking function is changed or a new function is added.

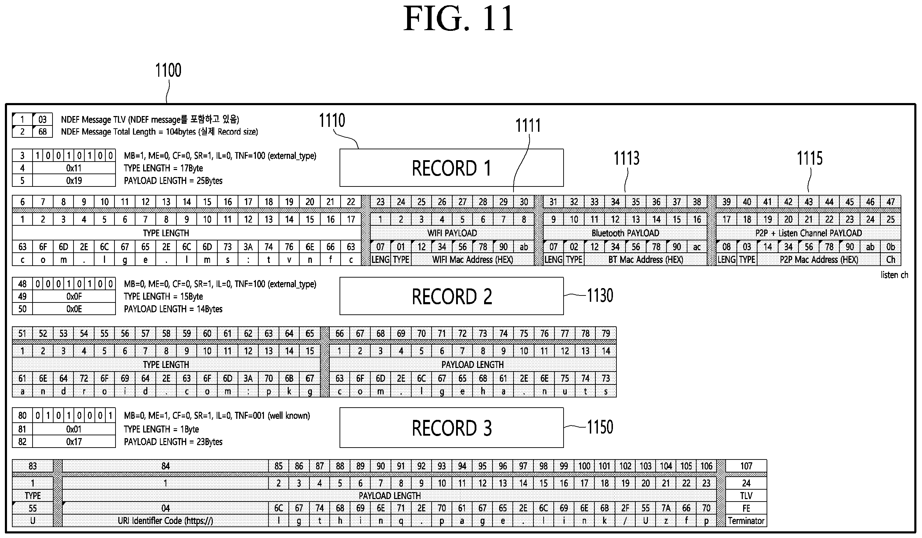

FIG. 11 is a diagram for describing a message transmitted to the mobile terminal by the remote-control device according to NFC tagging, according to an embodiment of the present disclosure.

In particular, FIG. 11 illustrates a first NFC data exchange format (NDEF) message 1100 including address information and application information of the display device 100 according to NFC tagging.

The first NDEF message 1100 may include a first NDEF record 1110, a second NDEF record 1130, and a third NDEF record 1150.

The first NDEF record 1110 may include a WiFi payload field 1111, a Bluetooth payload field 1113, and a P2P payload field 1115.

The WiFi payload field 1111 may include a WiFi MAC address of the display device 100.

The Bluetooth payload field 1113 may include a Bluetooth MAC address of the display device 100.

The P2P payload field 1115 may include a P2P MAC address of the display device 100 that complies with the Wi-Fi direct standard. The P2P payload field 1115 may further include listen channel information.

The reason why the first NDEF record 1110 includes the WiFi payload field 1111, the Bluetooth payload field 1113, and the P2P payload field 1115 is because which standard to establish wireless connection between the display device 100 and the mobile terminal 500 is not known.

The second NDEF record 1130 may include application information matching a first OS. The first OS may be Android, but this is only an example. The application information may include a package name that represents the unique name of the application.

The third NDEF record 1150 may include application information matching a second OS. The second OS may be iOS, but this is only an example. The application information may include a package name that represents the unique name of the application.

The third NDEF record 1150 may further include a URI identifier code.

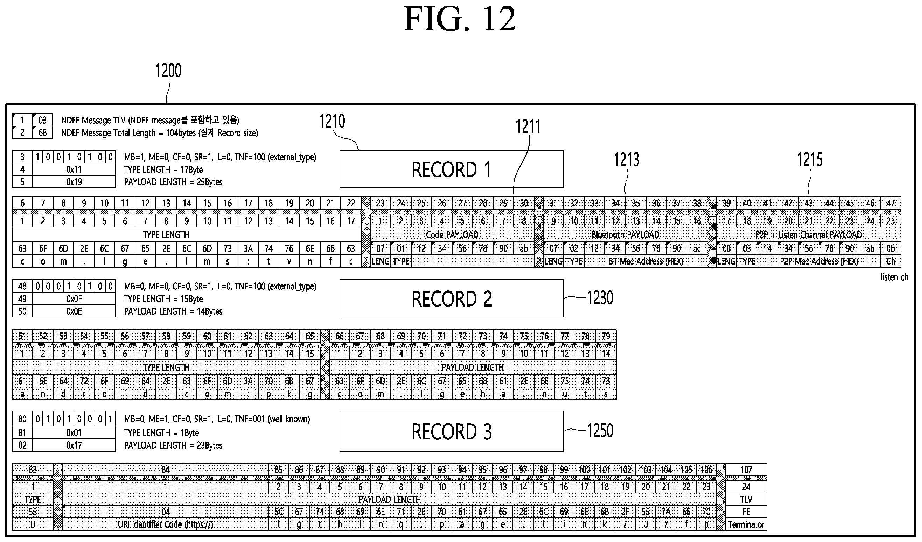

FIG. 12 is a diagram for describing a message transmitted to the mobile terminal by the remote-control device according to NFC tagging, according to an embodiment of the present disclosure.

In particular, FIG. 12 illustrates a second NDEF message 1200 including address information, capability information, and application information of the display device 100 according to NFC tagging.

The first NDEF message 1200 may include a first NDEF record 1210, a second NDEF record 1230, and a third NDEF record 1250.

The first NDEF record 1210 may include a code payload field 1211, a Bluetooth payload field 1213, and a P2P payload field 1215.

The code payload field 1211 may include information about the interworking functions that may be supported by the display device 100. The code payload field 1211 may further include an OS version and a model name of the display device 100.

The Bluetooth payload field 1213 may include a Bluetooth MAC address of the display device 100.

The P2P payload field 1215 may include a P2P MAC address of the display device 100 that complies with the Wi-Fi direct standard. The P2P payload field 1215 may further include listen channel information.

The second NDEF record 1230 may include application information matching a first OS. The first OS may be Android, but this is only an example. The application information may include a package name that represents the unique name of the application.

The third NDEF record 1250 may include application information matching a second OS. The second OS may be iOS, but this is only an example. The application information may include a package name that represents the unique name of the application.

The third NDEF record 1250 may further include a URI identifier code.

In another embodiment, the code payload field 1211 may be included as a replacement for the P2P payload field 1215. In this case, the first NDEF record 1210 may be configured to include the WiFi payload field 1111, the Bluetooth payload field 1213, and the code payload field 1211.

According to an embodiment of the present disclosure, the above-described method can be implemented with codes readable by a processor on a medium having the program recorded thereon. Examples of the processor-readable medium may include read-only memory (ROM), random access memory (RAM), compact disc read-only memory (CD-ROM), magnetic tape, floppy disk, and optical data storage device.

The display device described above is not limitedly applicable to the configuration and method of the above-described embodiments, and the embodiments are configured by selectively combining all or part of each of the embodiments such that various modifications can be made.

## Claims

1. A mobile terminal comprising:
a display;
a near field communication (NFC) circuit configured to transmit an NFC tagging signal to a remote-control device and receive address information and capability information of a display device from the remote-control device in response to the NFC tagging signal;
a Wi-Fi circuit configured to perform a Wi-Fi connection with the display device by using the address information of the display device; and
a processor configured to display, on the display, a plurality of interworking functions supportable by the display device, based on the capability information.

2. The mobile terminal of claim 1, wherein the processor is configured to transmit, to the display device, a request for performing a selected interworking function in response to a selection of one of the plurality of interworking functions through the Wi-Fi circuit.

3. The mobile terminal of claim 1, wherein the NFC circuit is configured to further receive application information in response to the NFC tagging signal, and
wherein the processor is configured to execute an application based on the application information and display the plurality of interworking functions included in the capability information on an execution screen of the application.

4. The mobile terminal of claim 1, wherein the capability information includes the plurality of interworking functions supportable by the display device and a plurality of code numbers respectively corresponding to the plurality of interworking functions.

5. The mobile terminal of claim 1, wherein the NFC circuit is configured to receive, from the remote-control device, an NFC data exchange format (NDEF) message including the address information, the capability information, and the application information.

6. The mobile terminal of claim 5, wherein the address information includes one or more of a Bluetooth address, a Wi-Fi address, and a Wi-Fi direct address of the display device,
wherein the capability information includes information about the plurality of interworking functions, and wherein the application information includes an application package name that identifies a name of the application.

7. The mobile terminal of claim 5, wherein the capability information further includes an operating system version and a model name of the display device.

8. The mobile terminal of claim 1, wherein the plurality of interworking functions includes a mirroring function, a reverse mirroring function, an audio reverse mirroring function, and a content reproduction function.

9. A display system comprising:
a remote-control device;
a display device configured to be paired with the remote-control device through Bluetooth and transmit address information and capability information of a display device to the remote-control device; and
a mobile terminal,
wherein the mobile terminal is configured to:
transmit a near field communication (NFC) tagging signal to the remote-control device and receive the address information and the capability information of the display device from the remote-control device in response to the NFC tagging signal;
perform a Wi-Fi connection with the display device by using the address information of the display device; and
display a plurality of linkage functions supportable by the display device, based on the capability information.

10. The display system of claim 9, wherein the mobile terminal is configured to transmit, to the display device, a request for performing a selected interworking function in response to a selection of one of the plurality of interworking functions through the Wi-Fi circuit.

11. The display system of claim 9, wherein the mobile terminal is configured to:
further receive application information in response to the NFC tagging signal, and
execute an application based on the application information and display the plurality of interworking functions included in the capability information on an execution screen of the application.

12. The display system of claim 9, wherein the capability information includes the plurality of interworking functions supportable by the display device and a plurality of code numbers respectively corresponding to the plurality of interworking functions.

13. The display system of claim 9, wherein the mobile terminal is configured to receive, from the remote-control device, an NFC data exchange format (NDEF) message including the address information, the capability information, and the application information.

14. The display system of claim 13, wherein the address information includes one or more of a Bluetooth address, a Wi-Fi address, and a Wi-Fi direct address of the display device,
wherein the capability information includes information about the plurality of interworking functions, and
wherein the application information includes an application package name that identifies a name of the application.

15. The display system of claim 13, wherein the capability information further includes an operating system version and a model name of the display device.
